# EUROPEAN PATENT SPECIFICATION

(11) **EP 3 152 991 B1**
(45) Date of publication and mention of the grant of the patent: **04.12.2019**
(21) Application number: 15425082.3
(22) Date of filing: 08.10.2015
(51) Int. Cl.: A01B 39/08, A01B 39/22

(54) **APPARATUS FOR REMOVING WEEDS, AND ASSOCIATED AGRICULTURAL MACHINE**
VORRICHTUNG ZUR UNKRAUTENTFERNUNG UND ZUGEHÖRIGE LANDWIRTSCHAFTLICHE MASCHINE
APPAREIL POUR ÉLIMINER LES MAUVAISES HERBES ET MACHINE AGRICOLE ASSOCIÉE

(43) Date of publication of application: 12.04.2017
(73) Proprietor: Badalini Srl, 46017 Rivarolo Mantovano (MN) (IT)
(72) Inventor: Badalini, Giorgio, 46017 Rivarolo Mantovano MN (IT)
(74) Representative: Modiano, Micaela Nadia

(56) References cited:
- EP-A1- 0 453 420
- EP-A1- 1 116 427
- EP-A1- 1 127 481
- DE-C- 138 516
- JP-A- 2002 335 707
- JP-A- 2010 279 276
- US-A- 2 912 055
- US-A- 3 082 829
- US-A- 3 110 275
- US-A- 3 131 774
- US-A- 3 203 487
- US-A- 3 212 585
- US-A- 3 306 371
- US-A- 3 766 988
- US-A- 3 967 685
- US-A- 4 391 335
- US-A- 4 991 660
- US-A- 5 657 707
- US-A1- 2014 033 958
- US-B1- 6 935 435

## Description

The present invention relates to an apparatus for removing weeds and to an associated agricultural machine.

In the agricultural field, the need is felt to remove weeds that affect and infest crops.

As is known, weeds can in fact harm in various ways the plants that are the subject of agricultural production: weeds can in fact take away water, solar radiation and other nutrients, depreciate the quality of the crop, favor the growth and proliferation of parasites and diseases, damage agricultural tools intended to process the cultivated plants (and unprepared to deal with extraneous formations).

Unfortunately it is very difficult to achieve removal of weeds without damaging the crops at the same time.

Over time it has in fact been possible to witness may fruitless attempts to devise agricultural machines and tools aimed indeed at combining the two goals described above. In other words, there are machines that do not damage the crops but remove weeds only partially or not at all. Other constructive solutions instead actually achieve elimination but damage the crops and, most of all, leave the soil raised, with consequent considerable problems for the agricultural products that one wishes to grow. Moreover, the solutions cited above often damage the cannulas distributed along the soil and intended for irrigation.

Apparatuses for removing weeds are known from US 3 082 829, EP 1 116 427, EP 1 127 481, US 2 912 055, JP 2002 335707, JP 2010 279276 and US5657707.

In order to solve the problems described above, other manufacturers have developed machines provided with complex electronic systems, which however require continual maintenance by specialized technicians, raising company costs significantly. This makes these systems totally uneconomical, reducing significantly the diffusion and appeal of the machines that are equipped with them. Moreover, even these solutions often turn out to be only partially effective in removing weeds.

As an alternative, a further mode of intervention provides for resorting to chemical herbicides, the formulation of which is studied specifically, at least in theory, to contrast (exclusively) the formation and growth of weeds (therefore without damaging the crops).

Vice versa, it is often observed that these herbicides also damage the crops: moreover, this is in any case a very expensive solution that is contrary to the most recent trends of the market, which increasingly often seeks "natural" products that therefore are free from any chemical contamination.

It is in fact now known that by resorting to herbicides, soils are sprayed with large quantities of products that are toxic both for animals and for human beings. Toxicity is in fact now confirmed by the onset of numerous allergy problems (and sometimes even of forms of tumor) that indeed derive from the ingestion of these substances, which consumers intake together with the food obtained from the crops thus treated or simply through the air that they breathe.

Moreover, the residues of the chemical products, which are toxic, often pollute water tables, compromising the purity of the water, according to the criteria set by European standards (and not only). These standards in fact increasingly often set severe limits to the use of chemical herbicides indeed to reduce the overall pollution of the planet.

The aim of the present invention is to solve the problems described above, by providing an apparatus that allows to remove weeds effectively without damaging the crops.

Within this aim, an object of the invention is to provide an agricultural machine that allows to remove weeds effectively without damaging the crops.

Another object of the invention is to provide an apparatus that removes weeds economically and practically, without requiring specialized personnel and/or significant maintenance interventions.

Another object of the invention is to provide an apparatus and a machine that are versatile and can be adapted to any type of soil.

Another object of the invention is to provide an apparatus and a machine that ensure high reliability in operation and do not damage the cannulas intended for irrigation.

Another object of the invention is to comply with the principles of organic farming, without therefore resorting to chemical substances, reducing (or avoiding completely) their everyday use.

Another object of the invention is to provide an apparatus that adopts a technical and structural architecture that is alternative to that of apparatuses of the known type.

Another object of the invention is to provide an apparatus that can be obtained easily starting from commonly commercially available elements and materials.

This aim and these and other objects that will become better apparent hereinafter are achieved by an apparatus according to claim 1 and by an agricultural machine according to claim 8.

Further characteristics and advantages of the invention will become better apparent from the description of a preferred but not exclusive embodiment of the apparatus and of the machine according to the invention, illustrated by way of nonlimiting example in the accompanying drawings, wherein:
Figure 1 is a perspective view of an apparatus according to the invention;
Figure 2 is an exploded view of the apparatus of Figure 1;

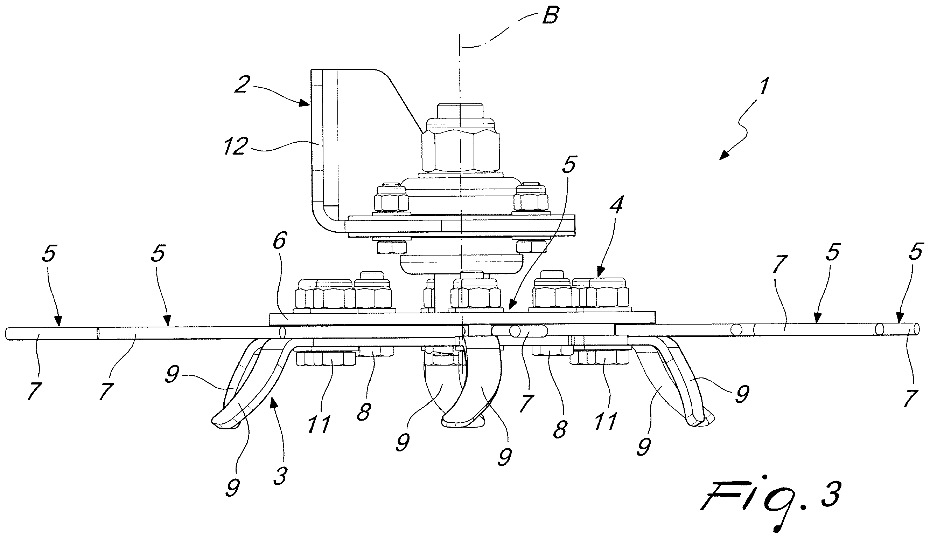

Figure 3 is a side elevation view of the apparatus of Figure 1;
Figure 4 is a highly enlarged plan view of a component of the apparatus of Figure 1;
Figure 5 is a perspective view of the use of the agricultural machine and of the apparatus according to the invention;
Figure 6 is a highly enlarged view of a detail of Figure 5;
Figure 7 is a rear view of the use of the agricultural machine and of the apparatus of Figure 5;
Figure 8 is a highly enlarged view of a detail of Figure 7.

With reference to the figures, the reference numeral 1 generally designates an apparatus for removing weeds which, as already shown, can harm cultivated plants A in various ways.

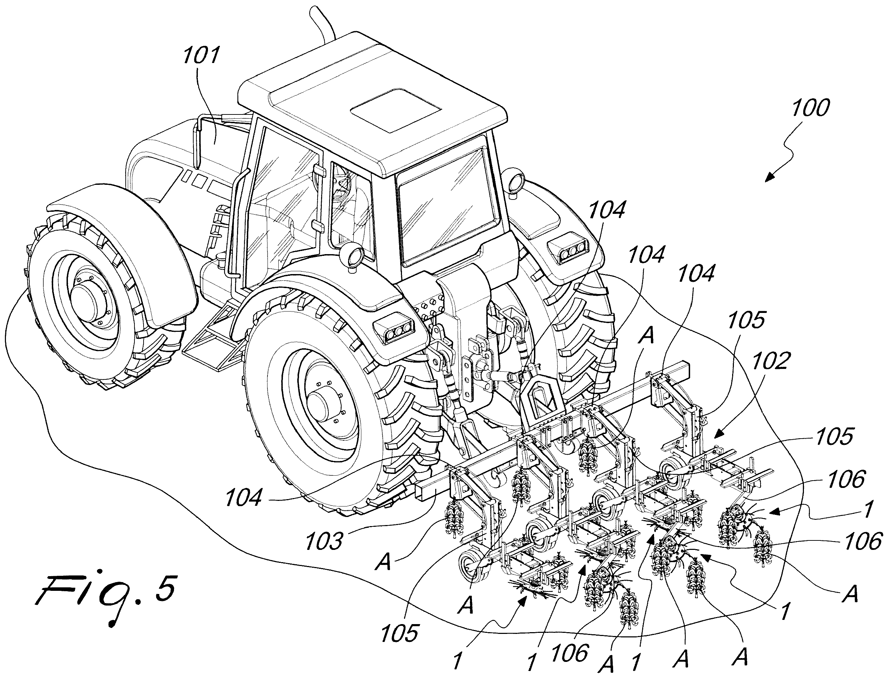

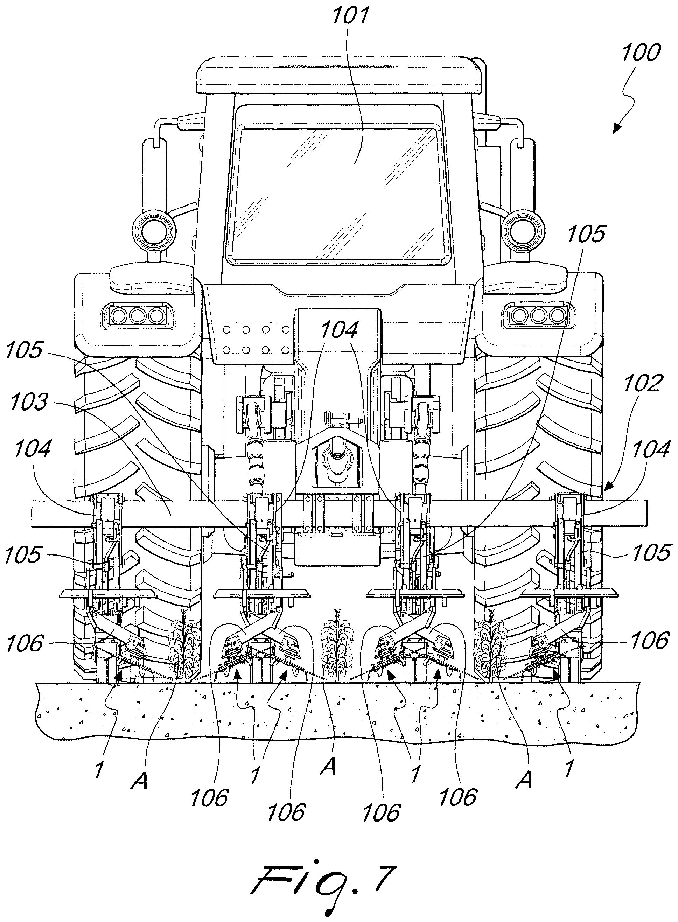

As can be deduced also from Figures 5 and 7, one or more apparatuses 1 can therefore be moved by an agricultural machine 100 (which is also a subject matter of the present description) along an agricultural soil, indeed to remove any weeds that might be present in said soil and are potentially harmful for the plants A and crops in general.

It is useful to note that the protective scope claimed herein is to be understood as covering any type of agricultural machine 100 capable of moving apparatuses 1 of the type that will be described hereinafter. In this context, therefore, protection is claimed both on the use of agricultural machines 100 provided specifically for removing weeds and on the installation of the apparatus 1 on vehicles and systems (normally) assigned to another purpose, for which therefore the apparatus 1 will be a useful accessory to be moved on the soil together with (or as a replacement of) the other agricultural tools with which they are optionally equipped.

According to the invention, therefore, the apparatus 1 comprises a support 2 that can be coupled, even indirectly, to the tractor 101 of the agricultural machine 100.

Furthermore, the apparatus 1 comprises means 3 for rotating an operating unit 4, which is supported by the support 2 so that it can rotate about its own central axis B.

A plurality of teeth 5 protrude radially from the peripheral region of the unit 4 and are indeed assigned to the progressive removal of weeds during travel along the agricultural soil, as a consequence of the rotation of the unit 4, of the teeth 5, about the central axis B.

It should be noted, therefore, that the invention thus outlined achieves from the outset the intended use: by advancing along the soil, for example parallel to the direction identified by the rows of plants A, the agricultural machine 100 tows behind it the apparatus 1, which affects and cuts the weeds with the rotating teeth 5, thus in practice removing them from such soil without damaging plants A or other crops.

Likewise, it is useful to note that the result thus obtained is improved, ensuring optimum reduction of weeds and maximum respect of the plants A that are present, by means of a careful and specific choice of the dimensional parameters of the components involved, as will become apparent in the paragraphs that follow.

In particular, in fact, in the preferred embodiment, which does not limit the application of the invention, each tooth 5 is constituted substantially by an elongated cylindrical element, which has a transverse diameter comprised between 1 mm and 10 mm and preferably comprised between 5 mm and 6 mm.

This shape (the circular transverse cross-section) and this size allow to obtain a particularly effective cutting of the weeds while ensuring the integrity of the plants A.

Even more particularly, the operating unit 4 has a substantially disk-like flattened shape and the (overall) transverse extension of the unit 4 and of the teeth 5, measured between respective free ends of mutually opposite teeth 5, is comprised between 200 mm and 500 mm and is preferably comprised between 300 mm and 350 mm.

This dimensional choice, also, is extremely interesting: these dimensional parameters in fact allow the teeth 5, and in particular their free end, to enter and exit from the rows, during rotation and advancement, with an optimum peripheral speed, in order to achieve the intended aim. The peripheral speed thus obtained in fact allows to obtain maximum removal of weeds and simultaneous respect of the plants A that are present.

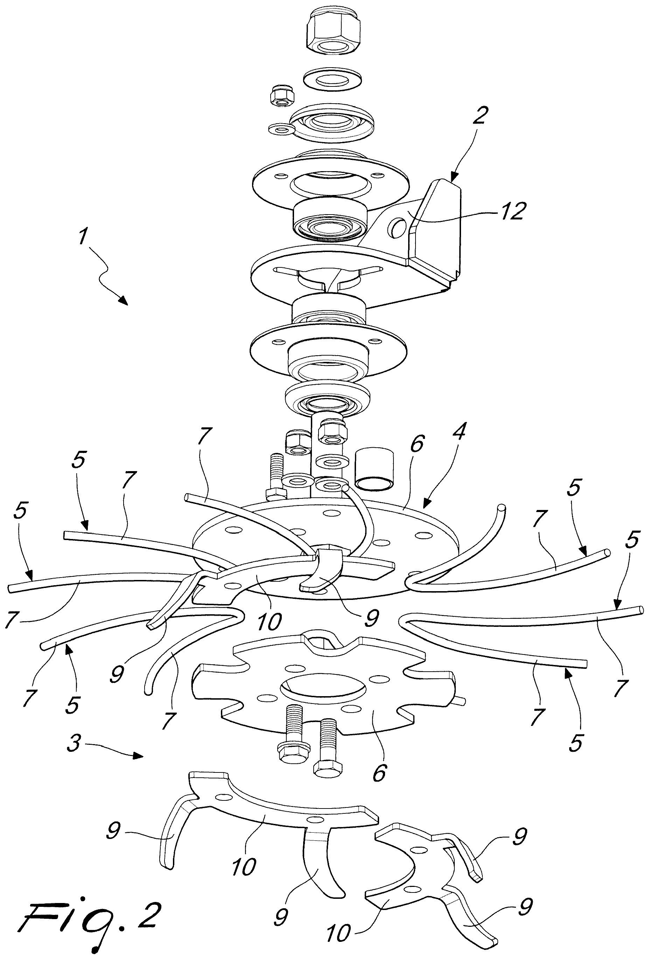

With further reference to the preferred constructive solution, and as is evident in particular from Figure 2, the operating unit 4 comprises two disks 6 that face each other and are proximate and mutually stable coupled. Therefore, the respective central portion 7a of corresponding filaments 7 bent into a U-shape, which protrude radially (from the edge of the disks 6) with the corresponding end portions 7b, 7c, which in turn define the teeth 5, is clamped stably indeed between the disks 6.

The mutual coupling between the disks 6 can be ensured by first bolts 8 (or other equivalent fixing systems).

Although the number of teeth 5 with which the apparatus 1 is provided can be any, it has been noticed that an optimum result (in terms of weed removal) is achieved by providing the apparatus 1 with teeth 5 in a number comprised between six and twenty-four, and preferably in a number equal to twelve (constituted preferably, therefore, by the end portions of six respective filaments 7).

The twelve teeth 5 (or other number associated with the respective operating unit 4) are distributed substantially uniformly around the operating unit 4.

Although the use of different materials is not excluded, in the preferred constructive solution each tooth 5 is made of spring steel.

To give maximum effectiveness in the weed removal action and at the same time ensure respect of the crops, each tooth 5 is curved in the opposite direction with respect to the direction of rotation imparted to the operating unit 4 by the means 3.

The curvature allows in an optimum manner to respect the plants A while removing the weeds.

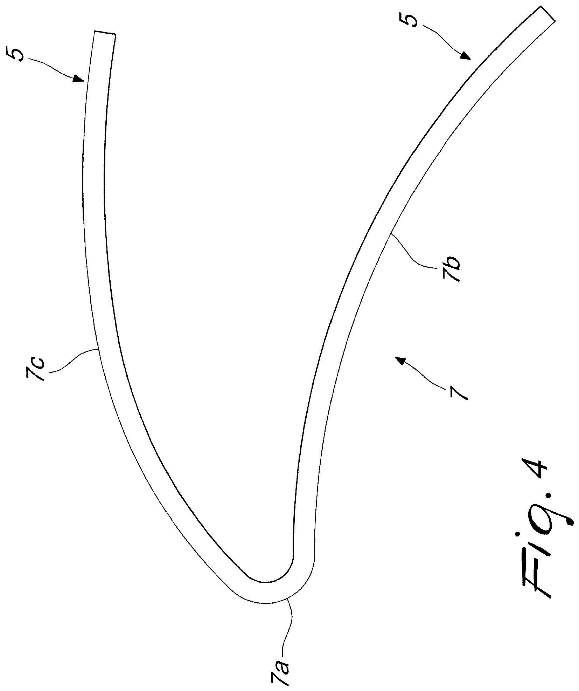

Even more particularly, and with specific reference to Figure 4 enclosed herein, in the preferred but not exclusive embodiment the central part 7a of each filament 7 has a radius of curvature equal to 6.5 mm (or at least comprised between 5 mm and 10 mm) and a first end part 7b has a radius of curvature equal to 170 mm (or at least comprised between 150 mm and 250 mm). With further reference to the preferred embodiment, a first segment of the second end part 7c (the one contiguous to the end part 7a) has a radius of curvature equal to 107 mm (or at least comprised between 50 mm and 150 mm), while the second (and last) segment of the second end part 7c has a radius of curvature equal to 221 mm (or at least comprised between 150 mm and 250 mm).

It is indeed the choice to curve the end parts 7b, 7c (and therefore the teeth 5) according to the dimensional and shape parameters indicated above that maximizes the results that can be obtained with the apparatus 1 according to the invention.

According to the invention, the means 3 comprise a plurality of blades 9 (for example in a number comprised between four and twelve, preferably in a number equal to six), each of which is extended rigidly from the peripheral region of the operating unit 4 and is directed oppositely with respect to the support 2.

Thus, during the advancement of the machine 100 along the agricultural soil and while keeping the operating unit 4 inclined with respect to the ground, one after the other each blade 9 affects the ground progressively, being consequently turned about the central axis B, consequently causing the movement of the operating unit 4, which is appropriately supported freely by the support 2, and of the teeth 5.

It should be noted, therefore, that the blades 9 allow to obtain the desired rotary motion of the teeth 5 without requiring specific motor drives for the apparatus 1 and therefore in a fully practical and economic manner, simply by utilizing the rectilinear motion of the machine 100 along the ground and "converting" it into a rotation of the unit 4.

Conveniently, each blade 9 is curved along the same direction of curvature as the teeth 5: in this manner, when they strike the ground, the danger that the blades 9 might jam or be driven into the ground (with evident unwanted effects) is avoided and they are instead moved in an optimum manner.

Preferably, in order to ensure optimum operation, the blades 9 have a height (measured therefore along the direction at right angles to the operating unit 4) comprised between 3 and 15 cm.

The blades 9 extend in pairs from crescent-shaped laminas 10 (Figure 2), which are interposed between the disks 6 and are anchored to one of them by means of second bolts 11.

It should be noted, moreover, that to avoid the risk of extraction of the filaments 7, allow easy replacement of the teeth 5 and at the same time contain the overall number of components of the apparatus 1 according to the invention, each one of the filaments 7 is wound, with said central portion 7a, around the stem of the second bolts 11.

As anticipated earlier, the present description (and the protective scope claimed herein) also relates to an agricultural machine, designated by the reference numeral 100 and optionally designed to also perform other tasks.

The agricultural machine 100 comprises a tractor 101, which can move along an agricultural soil, in order to be able to remove any weeds that might be present on that soil (as a primary or auxiliary task).

As anticipated, in the preferred but not exclusive application these weeds affect rows of plants A (as in the accompanying figures) and in this context (which is merely a non-limiting example of the application of the invention) the agricultural machine 100 follows a path that is substantially parallel to the path of the rows, so as to affect progressively each plant A of each row during its advancement. Obviously, as a function of the width of the soil and of the number of rows (and of apparatuses 1 mounted on the machine 100, as will become apparent), it is possible to provide one or more forward and return strokes in order to complete the removal work.

In any case, the use of machines 100 (and/or apparatuses 1) according to the invention in different contexts, and in other manners, without however abandoning the protective scope claimed herein, is not excluded.

According to the invention, therefore, the machine 100 comprises an apparatus 1 that is provided first of all with a support 2 that is coupled, even indirectly, to the tractor 101.

Furthermore, the apparatus 1 of the machine 100 comprises means 3 adapted to impart a rotary motion to an operating unit 4, which is supported rotatably by the support 2 about its own central axis B.

A plurality of teeth 5 is extended radially from the peripheral region of the unit 4 and are capable of removing progressively the weeds during advancement along the agricultural soil, indeed due to the rotation of the unit 4, and of the teeth 5, about the central axis B.

More generically, the protection claimed with the present description is extended to agricultural machines 100 provided with at least one apparatus 1 that has, in addition to what has been described above, one or more of the additional particularities described in the preceding pages and/or shown in the accompanying figures.

Favorably, the support 2 is coupled to the tractor 101 by means of a respective assembly 102 for adjusting the relative position of the corresponding apparatus 1 with respect to the tractor 101.

It is specified that the protective scope claimed herein must be understood to be extended (besides to the machines 100) to apparatuses 1 sold independently of the machine 100 that mounts them, and in this last case the manufacture of apparatuses 1 supplied without and with the assembly 102 is provided.

In particular, in the preferred (but nonlimiting) embodiment, the assembly 102 comprises a horizontal bar 103, which is coupled in a rear region, even indirectly, to the tractor 101. The bar 103 defines a sliding guide for at least one first slider 104, which is anchored to a truck 105 for towing the apparatus 1.

By making the first slider 104 slide along the bar 103, it is thus possible to vary the position of the apparatus 1 (at right angles to the advancement direction of the machine 100) in order to adapt to the position of the rows and of the plants A.

More particularly, in the preferred constructive solution the agricultural machine 100 comprises a plurality of apparatuses 1, towed by respective trucks 105, which are anchored to corresponding first sliders 104 that can slide on the bar 103.

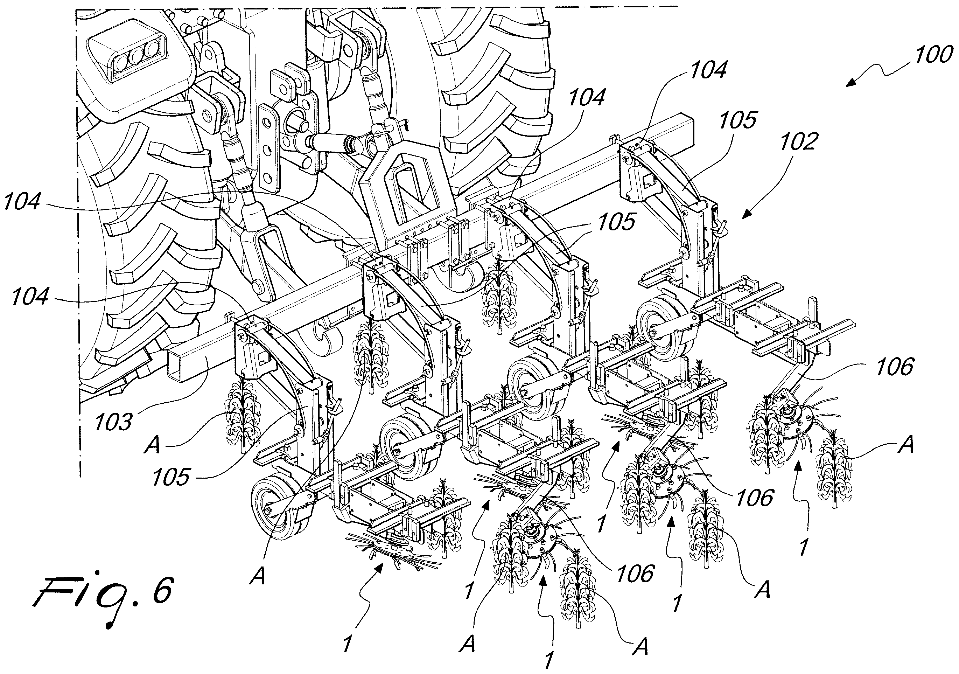

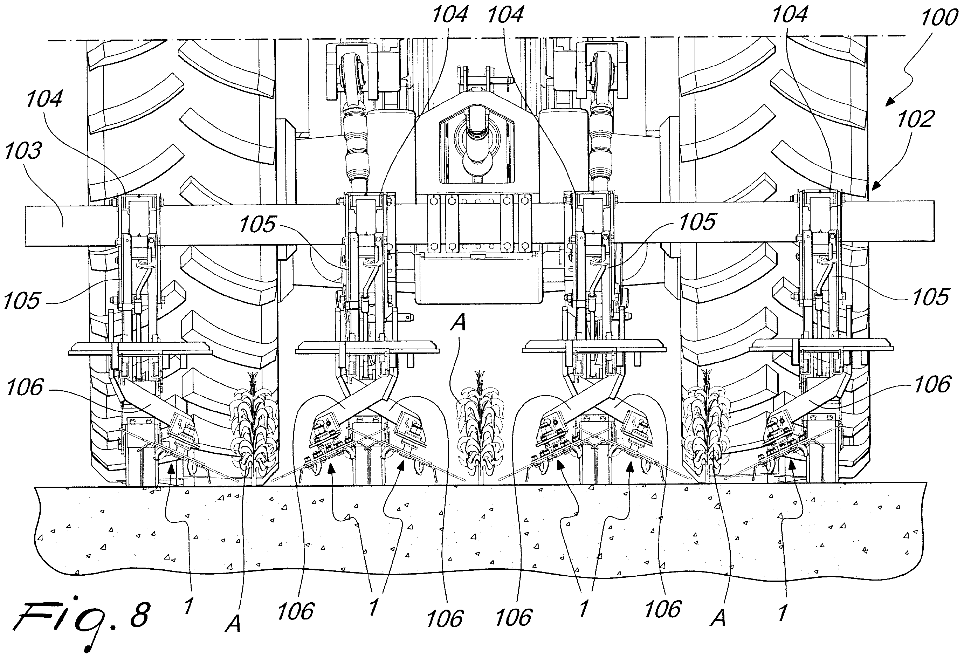

It should be noted that each apparatus 1 can be towed by a respective truck 105, and likewise provisions are made to associate with the same truck 105 two apparatuses 1 (as for the central trucks 105, shown in Figures 5 to 8), or even a larger number of apparatuses 1, as a function of the specific requirements.

When the machine 100 has a plurality of apparatuses 1, as indeed in the accompanying figures, the adjustment possibility offered by the assembly 102 turns out to be maximally useful.

It is in fact possible to define, for each pair of adjacent trucks 105 (or apparatuses 1), a center distance that corresponds to the distance between contiguous rows, obtaining for each apparatus 1 the transverse dimension that is most suitable for the specific distribution of the plants A from which weeds are to be removed.

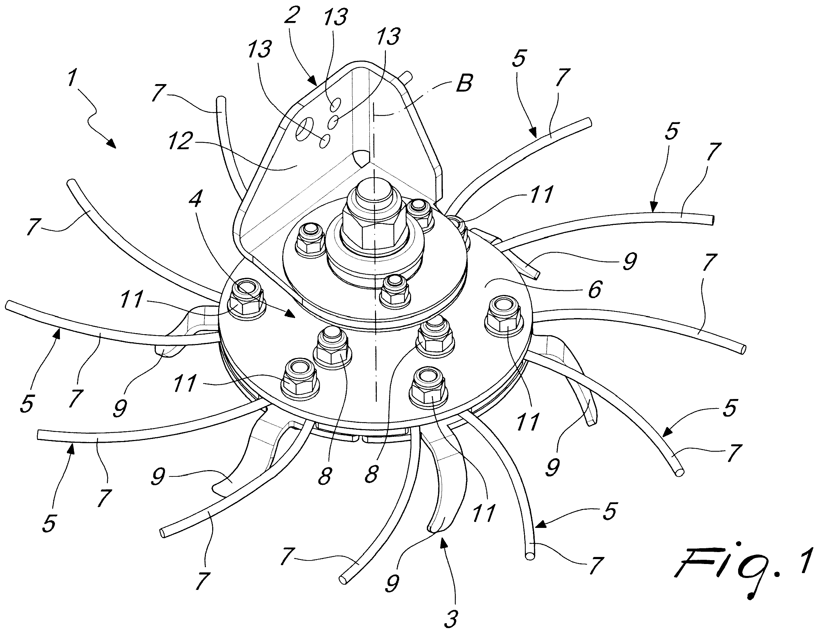

Indeed to obtain maximum versatility and allow the use of the same agricultural machine 100 and of the same apparatuses 1 in different contexts and for soils and crops of various types, the support 2 of the apparatus 1 comprises a plate 12 provided with a plurality of holes 13 that are distributed conveniently (Figure 1).

By varying the arrangement (inclination) of the plate 12 and of the support 2 with respect to the truck 105, each hole 13 can thus be aligned with a corresponding orifice defined along an end arm 106 of the truck 105, on the opposite side with respect to the corresponding first slider 104.

Thus, once the hole 13 to be aligned with the corresponding orifice has been chosen, it is possible to insert therein a respective fixing element, such as a screw and the like, in any case so as to obtain the consequent stable coupling of the apparatus 1 with the tractor 101 according to one selectively among a plurality of different configurations, which correspond to different inclinations of the operating unit 4, of the teeth 5 and of the blades 9 with respect to the ground.

However, providing the assembly 102, and more generally the machine 100 according to the invention, with additional possibilities to adjust the position of each apparatus 1 with respect to the tractor 101 is not excluded.

For example, in fact, the bar 103 can first of all be raised or lowered at will, consequently varying the vertical height at which the first sliders 104 can slide.

Furthermore, mounting the arms 106 on second sliders, which can slide (parallel to the advancement direction) with respect to other components of the trucks 105, which are integral with the first sliders 104, so as to vary accordingly the longitudinal distance (along the advancement direction) at which each apparatus 1 can operate, is not excluded.

As an alternative, each arm 106 can be articulated to the respective component of the truck 105 that is integral with the first slider 104, so as to give a further degree of freedom to each apparatus 1 according to the invention.

Operation of the apparatus and of the machine according to the invention is therefore evident from what has been described so far.

As shown, in fact, the agricultural machine 100 can move along the agricultural soil of interest, towing with it one or more apparatuses 1 that are mounted to the rear.

During forward travel, one by one the blades 9 strike the surface of the agricultural soil, thus being turned, together with the operating unit 4 and with the teeth 5 with which they are integral.

By thus rotating about the central axis B, the teeth 5 cut the weeds, without compromising the integrity of the plants A or in any case of the crops, which evidently one wishes to preserve. The weeds thus removed (cut) can then be subsequently gathered and removed or, more simply, can be left to wilt, but in any case they can no longer harm the plants A in any way.

As already noted, an optimum result in terms of weed removal and a simultaneous respect of the integrity of the cultivated plants A is achieved by adopting at least some (and preferably all) the choices described in the preceding pages regarding the dimensional and shape parameters and the material of the various components involved.

The apparatus 1 in fact turns out to be extremely effective when the teeth 5 (preferably twelve) are constituted by elongated cylindrical elements made of spring steel (which ensures maximum flexibility), which have a diameter of the transverse cross-section comprised between 5 mm and 6 mm and are curved (like the blades 9) in the opposite direction with respect to the direction of rotation imparted to the operating unit 4.

Furthermore, the transverse extension of the unit 4 and of the teeth 5, measured between respective free ends of mutually opposite teeth 5, is comprised preferably between 300 mm and 350 mm.

The specific curvature of the teeth 5 and of the blades 9, as visible in the accompanying figures, also contributes to achieving the optimum result.

As already noted, the choice to resort to the blades 9 in order to move the unit 4 and the teeth 5, without therefore imposing specific motor drives and/or complex gear systems, allows to simplify the structure of the apparatus 1, making it absolutely practical and economic: therefore, with respect to the complex and laborious known solutions, it allows a substantial reduction in management and maintenance (and purchase) costs.

By affecting the soil, the blades 9 perform a useful auxiliary function, since they aerate the soil, breaking any surface crust.

The many adjustment possibilities offered by the assembly 102 (and by the holes 13) ensure maximum versatility of the invention, which can adapt easily to any type and shape of the soil, as well as to any distribution of the rows of plants A.

By resorting to the agricultural machine 100 and to the apparatus 1 according to the invention, weed removal occurs very simply and evidently without requiring the intervention of specialized technicians and/or frequent maintenance.

Furthermore, the invention requires no use of chemical substances (herbicides or others), and this ensures once again cost containment as well as respect of the principles of organic farming, ensuring absolutely healthy production.

Besides, even if one does not deem to have to comply with the stringent constraints of organic farming, the simplicity and low cost of the apparatus 1 in any case make it preferable to use it as a replacement of herbicides (reducing and/or avoiding their use) with evident benefit for the environment and for the health conditions of soils, water tables and crops.

Finally, it should be noted that the ways in which the machine 100 and the apparatus 1 remove the weeds do not compromise in any way any cannulas or other irrigation systems optionally distributed on the soil (or at least partially buried therein), thus achieving a further significant result.

In practice it has been found that the apparatus and the machine according to the invention fully achieve the intended aim, since resorting to a support that can be coupled to the agricultural machine and to means for the rotation of an operating unit, from the peripheral region of which a plurality of teeth protrude radially, allows to perform the progressive removal of weeds without damaging the crops.

The invention thus conceived is susceptible of numerous modifications and variations, all of which are within the scope of the accompanying claims.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for removing weeds, which can be towed by an agricultural machine (100) along an agricultural soil, in order to remove any weeds that might be present on said soil, said apparatus (1) comprising a support (2) that can be coupled, even indirectly, to the tractor (101) of the agricultural machine (100), and means (3) for the rotation of an operating unit (4), which is supported rotatably by said support (2) about its own central axis (B), a plurality of teeth (5) protruding radially from the peripheral region of said unit (4), for the progressive removal of the weeds during advancement along the agricultural soil, as a consequence of the rotation of said unit (4), and of said teeth (5), about said central axis (B), wherein said means (3) comprise a plurality of blades (9), each one of said blades (9) protruding rigidly from the peripheral region of said operating unit (4) and being on the opposite side with respect to said support (2), in order to affect the soil progressively, during the advancement of the machine (100) along the agricultural soil and with said operating unit (4) kept inclined with respect to said soil, and to be consequently turned about said central axis (B), with consequent movement of said operating unit (4), which is supported freely by said support (2), and of said teeth (5), each one of said teeth (5) lying in a plane perpendicular to said central axis (B)
**characterized in that** each one of said teeth (5) is curved in the opposite direction with respect to the direction of rotation imparted to said operating unit (4) by said means (3), so as to define a concavity directed backwards with respect to said direction of rotation imparted to said operating unit (4).

2. The apparatus according to claim 1, **characterized in that** each one of said teeth (5) is constituted substantially by an elongated cylindrical element, which has a diameter of the transverse cross-section comprised between 1 mm and 10 mm and preferably comprised between 5 mm and 6 mm.

3. The apparatus according to claim 1 or claim 2, **characterized in that** said operating unit (4) has a substantially disk-like flat shape, the transverse extension of said unit (4) and of said teeth (5), measured between respective free ends of said opposite teeth (5), being comprised between 200 mm and 500 mm and being preferably comprised between 300 mm and 350 mm.

4. The apparatus according to claims 2 and 3, **characterized in that** said operating unit (4) comprises two mutually facing and proximate discs (6), which are mutually coupled stably, the respective central part (7a) of corresponding filaments (7) bent into a U-shape and protruding radially with the corresponding end parts (7b, 7c), which define said teeth (5), being fastened stably between said disks (6).

5. The apparatus according to one or more of the preceding claims, **characterized in that** it comprises between six and twenty-four of said teeth (5), and preferably twelve of said teeth (5), distributed substantially uniformly around said operating unit (4).

6. The apparatus according to one or more of the preceding claims, **characterized in that** each one of said teeth (5) is made of spring steel.

7. The apparatus according to claim 1, **characterized in that** each one of said blades (9) is curved along the same direction of curvature as said teeth (5).

8. An agricultural machine comprising a tractor (101) that can move along an agricultural soil, in order to remove any weeds that might be present on said soil, **characterized in that** it comprises at least one apparatus (1) according to one or more of the preceding claims.

9. The agricultural machine according to claim 8, **characterized in that** said support (2) is coupled to said tractor (101) by means of a respective assembly (102) for adjusting the relative position of the corresponding said apparatus (1) with respect to said tractor (101).

10. The agricultural machine according to claim 9, **characterized in that** said assembly (102) comprises a horizontal bar (103, which is coupled to the rear, even indirectly, to said tractor (101), said bar (103) defining a sliding guide for at least one first slider (104), which is anchored to a truck (105) for towing said at least one apparatus (1).

11. The agricultural machine according to claim 10, **characterized in that** it comprises a plurality of said apparatuses (1), towed by respective said trucks (105) anchored to corresponding first sliders (104) that can slide on said bar (103).

12. The agricultural machine according to claim 10 or 11, **characterized in that** said support (2) of said at least one apparatus (1) comprises a plate (12) that is provided with a plurality of appropriately distributed holes (13), each one of said holes (13) being alignable with a corresponding orifice that is defined along an end arm (106) of said truck (105), on the opposite side with respect to the corresponding said first slider (104), for the insertion of a respective fixing element, such as a screw and the like, and the consequent stable coupling of said apparatus (1) to said tractor (101) according to one selectively among a plurality of different configurations, which correspond to different inclinations of said operating unit (4), of said teeth (5) and of said blades (9), with respect to the ground.

## Patentansprüche

1. Vorrichtung zum Entfernen von Unkraut, die von einer landwirtschaftlichen Maschine (100) entlang eines Ackerbodens gezogen werden kann, um mögliches auf dem Boden vorhandenes Unkraut zu entfernen, wobei die Vorrichtung (1) eine Stütze (2) aufweist, die, auch indirekt, an den Traktor (101) der landwirtschaftlichen Maschine (100) gekoppelt werden kann, und Mittel (3) zum Drehen einer Betriebseinheit (4), die um ihre eigene Mittelachse (B) drehbar durch die Stütze (2) gestützt wird, eine Vielzahl von Zähnen (5), die radial vom Umfangsbereich der Einheit (4) vorstehen, um das Unkraut während des Vorwärtsfahrens entlang des Ackerbodens als Folge der Drehung der Einheit (4), und der Zähne (5), um die Mittelachse (B) progressiv zu entfernen, wobei das Mittel (3) eine Vielzahl von Klingen (9) aufweist, wobei jede der Klingen (9) starr vom Umfangsbereich der Betriebseinheit (4) vorsteht und sich bezüglich der Stütze (2) auf der gegenüberliegenden Seite befindet, um den Boden während des Vorwärtsfahrens der Maschine (100) entlang des Ackerbodens progressiv zu bearbeiten, und wobei die Betriebseinheit (4) zum Boden geneigt gehalten wird, und um konsequent um die Mittelachse (B) gedreht zu werden, mit konsequenter Bewegung der Betriebseinheit (4), die frei durch die Stütze (2) gestützt wird, und der Zähne (5), wobei jeder der Zähne (5) in einer Ebene senkrecht zu der Mittelachse (B) liegt,
**dadurch gekennzeichnet, dass** jeder der Zähne (5) in entgegengesetzter Richtung zu der durch das Mittel (3) auf die Betriebseinheit (4) aufgebrachten Drehrichtung gebogen ist, um eine Konkavität zu definieren, die bezüglich der auf die Betriebseinheit (4) aufgebrachten Drehrichtung rückwärts gerichtet ist.

2. Vorrichtung nach Anspruch 1, **dadurch gekennzeichnet, dass** jeder der Zähne (5) im Wesentlichen aus einem länglichen zylindrischen Element besteht, das einen Durchmesser des transversalen Querschnitts hat, der zwischen 1 mm und 10 mm beträgt, und bevorzugt zwischen 5 mm und 6 mm beträgt.

3. Vorrichtung nach Anspruch 1 oder Anspruch 2, **dadurch gekennzeichnet, dass** die Betriebseinheit (4) eine im Wesentlichen scheibenförmige flache Form hat, wobei die Quererstreckung der Einheit (4) und der Zähne (5), zwischen jeweiligen freien Enden der gegenüberliegenden Zähne (5) gemessen, zwischen 200 mm und 500 mm beträgt, und bevorzugt zwischen 300 mm und 350 mm beträgt.

4. Vorrichtung nach Anspruch 2 und 3, **dadurch gekennzeichnet, dass** die Betriebseinheit (4) zwei einander zugewandte und benachbarte Scheiben (6) aufweist, die stabil miteinander verbunden sind, wobei der jeweilige Mittelteil (7a) korrespondierender Drähte (7), die in U-Form gebogen sind und radial mit den korrespondierenden Endteilen (7b, 7c), die die Zähne (5) definieren, vorstehen, stabil zwischen den Scheiben (6) befestigt ist.

5. Vorrichtung nach einem oder mehreren der vorhergehenden Ansprüche, **dadurch gekennzeichnet, dass** sie zwischen sechs und vierundzwanzig der Zähne (5), und bevorzugt zwölf der Zähne (5), aufweist, die im Wesentlichen gleichmäßig um die Betriebseinheit (4) herum verteilt sind.

6. Vorrichtung nach einem oder mehreren der vorhergehenden Ansprüche, **dadurch gekennzeichnet, dass** jeder der Zähne (5) aus Federstahl hergestellt ist.

7. Vorrichtung nach Anspruch 1, **dadurch gekennzeichnet, dass** jede der Klingen (9) in derselben Krümmungsrichtung wie die Zähne (5) gebogen ist.

8. Landwirtschaftliche Maschine, die einen Traktor (101) aufweist, der sich entlang eines Ackerbodens bewegen kann, um mögliches in dem Boden vorhandenes Unkraut zu entfernen, **dadurch gekennzeichnet, dass** sie wenigstens eine Vorrichtung (1) nach einem oder mehreren der vorhergehenden Ansprüche aufweist.

9. Landwirtschaftliche Maschine nach Anspruch 8, **dadurch gekennzeichnet, dass** die Stütze (2) mittels einer entsprechenden Anordnung (102) an den Traktor (101) gekoppelt ist, um die relative Position der entsprechenden Vorrichtung (1) bezüglich des Traktors (101) einzustellen.

10. Landwirtschaftliche Maschine nach Anspruch 9, **dadurch gekennzeichnet, dass** die Anordnung (102) eine horizontale Stange (103) aufweist, die, auch indirekt, an die Rückseite des Traktors (101) gekoppelt ist, wobei die Stange (103) eine Gleitführung für wenigstens einen ersten Gleiter (104) definiert, der an einem Fahrgestell (105) verankert ist, um die wenigstens eine Vorrichtung (1) zu ziehen.

11. Landwirtschaftliche Maschine nach Anspruch 10, **dadurch gekennzeichnet, dass** sie eine Vielzahl der Vorrichtungen (1) aufweist, die von jeweiligen Fahrgestellen (105) gezogen werden, die an korrespondierenden ersten Gleitern (104) verankert sind, die auf der Stange (103) gleiten können.

12. Landwirtschaftliche Maschine nach Anspruch 10 oder 11, **dadurch gekennzeichnet, dass** die Stütze (2) der wenigstens einen Vorrichtung (1) eine Platte (12) aufweist, die mit einer Vielzahl entsprechend verteilter Löcher (13) versehen ist, wobei jedes der Löcher (13) mit einer korrespondierenden Öffnung ausgerichtet werden kann, die entlang eines Endarms (106) des Fahrgestells (105) ausgebildet ist, auf der gegenüberliegenden Seite bezüglich des korrespondierenden ersten Gleiters (104) zum Einfügen eines jeweiligen Befestigungselements, wie zum Beispiel einer Schraube und dergleichen, und somit zum stabilen Koppeln der Vorrichtung (1) an den Traktor (101) gemäß einer ausgewählten einer Vielzahl verschiedener Konfigurationen, die verschiedenen Neigungen der Betriebseinheit (4), der Zähne (5) und der Klingen (9) zum Boden entsprechen.

## Revendications

1. Appareil destiné à retirer des mauvaises herbes, qui peut être remorqué par une machine agricole (100) le long d'un sol agricole, afin de retirer des mauvaises herbes qui peuvent être présentes sur ledit sol, ledit appareil (1) comportant un support (2) qui peut être accouplé, même indirectement, au tracteur (101) de la machine agricole (100), et des moyens (3) pour la rotation d'une unité d'actionnement (4), qui est supportée par ledit support (2) de façon à pouvoir tourner autour de son axe central (B), une pluralité de dents (5) faisant radialement saillie depuis la zone périphérique de ladite unité (4), pour le retrait progressif des mauvaises herbes pendant l'avancée le long du sol agricole, en conséquence de la rotation de ladite unité (4), et desdites dents (5), autour dudit axe central (B),
dans lequel lesdits moyens (3) comportent une pluralité de lames (9), chacune desdites lames (9) faisant rigidement saillie depuis la zone périphérique de ladite unité d'actionnement (4) et se situant sur le côté opposé par rapport audit support (2), afin d'affecter le sol progressivement, pendant l'avancée de la machine (100) le long du sol agricole et avec ladite unité d'actionnement (4) maintenue inclinée par rapport audit sol, et pour par conséquent tourner autour dudit axe central (B), avec un mouvement conséquent de ladite unité d'actionnement (4), qui est supportée librement par ledit support (2), et desdites dents (5), chacune desdites dents(5) étant située dans un plan perpendiculaire audit axe central (B),
**caractérisé en ce que** chacune desdites dents (5) est incurvée dans le sens opposé par rapport au sens de rotation donné à ladite unité d'actionnement (4) par lesdits moyens (3), de manière à définir une concavité dirigée vers l'arrière par rapport audit sens de rotation donné à ladite unité d'actionnement (4).

2. Appareil selon la revendication 1, **caractérisé en ce que** chacune desdites dents (5) est sensiblement constituée d'un élément cylindrique allongé, qui a un diamètre de la section transversale compris entre 1 mm et 10 mm, et de préférence compris entre 5 mm et 6 mm.

3. Appareil selon la revendication 1 ou la revendication 2, **caractérisé en ce que** ladite unité d'actionnement (4) a une forme plate sensiblement analogue à un disque, l'extension transversale de ladite unité (4) et desdites dents (5), mesurée entre des extrémités libres respectives desdites dents (5) opposées, étant comprise entre 200 mm et 500 mm et étant de préférence comprise entre 300 mm et 350 mm.

4. Appareil selon les revendications 2 et 3, **caractérisé en ce que** ladite unité d'actionnement (4) comporte deux disques mutuellement opposés et proximaux (6), qui sont mutuellement accouplés de manière stable, la partie centrale (7a) respective de filaments (7) correspondants étant pliée en forme de U et faisant radialement saillie, les parties d'extrémité (7b, 7c) correspondantes, qui définissent lesdites dents (5), étant fixées de manière stable entre lesdits disques (6).

5. Appareil selon une ou plusieurs des revendications précédentes, **caractérisé en ce qu'**il comporte entre six et vingt-quatre desdites dents (5), et de préférence douze desdites dents (5), réparties de manière sensiblement uniforme autour de ladite unité d'actionnement (4).

6. Appareil selon une ou plusieurs des revendications précédentes, **caractérisé en ce que** chacune desdites dents (5) est constituée d'un acier à ressorts.

7. Appareil selon la revendication 1, **caractérisé en ce que** chacune desdites lames (9) est incurvée le long de la même direction de courbure que lesdites dents (5).

8. Machine agricole comportant un tracteur (101) qui peut se déplacer le long d'un sol agricole, afin de retirer des mauvaises herbes qui peuvent être présentes sur ledit sol, **caractérisée en ce qu'**elle comporte au moins un appareil (1) selon une ou plusieurs des revendications précédentes.

9. Machine agricole selon la revendication 8, **caractérisée en ce que** ledit support (2) est accouplé audit tracteur (101) au moyen d'un ensemble (102) respectif pour régler la position relative dudit appareil (1) correspondant par rapport audit tracteur (101).

10. Machine agricole selon la revendication 9, **caractérisée en ce que** ledit ensemble (102) comporte une barre horizontale (103), qui est accouplée à l'arrière, même indirectement, audit tracteur (101), ladite barre (103) définissant un guide coulissant pour au moins un premier coulisseau (104), qui est ancré à un chariot (105) pour remorquer ledit au moins un appareil (1).

11. Machine agricole selon la revendication 10, **caractérisée en ce qu'**elle comporte une pluralité desdits appareils (1), remorqués par lesdits chariots (105) respectifs ancrés à des premiers coulisseaux (104) correspondants qui peuvent coulisser sur ladite barre (103).

12. Machine agricole selon la revendication 10 ou 11, **caractérisée en ce que** ledit support (2) dudit au moins un appareil (1) comporte une plaque (12) qui est pourvue d'une pluralité de trous (13) répartis de manière appropriée, chacun desdits trous (13) pouvant être aligné avec un orifice correspondant qui est défini le long d'un bras d'extrémité (106) dudit chariot (105), sur le côté opposé par rapport audit premier coulisseau (104) correspondant, pour l'insertion d'un élément de fixation respectif, tel qu'une vis et analogue, et l'accouplement stable conséquent dudit appareil (1) audit tracteur (101) en fonction d'une configuration sélectionnée parmi une pluralité de configurations différentes, qui correspondent à différentes inclinaisons de ladite unité d'actionnement (4), desdites dents (5) et desdites lames (9), par rapport au sol.
